# EUROPÄISCHE PATENTSCHRIFT

(11) **EP 2 938 004 B1**
(45) Veröffentlichungstag und Bekanntmachung des Hinweises auf die Patenterteilung: **22.11.2017**
(21) Anmeldenummer: 15164935.7
(22) Anmeldetag: 23.04.2015
(51) Int. Cl.: H04B 3/54, H04L 29/12, H04L 12/24, H04L 12/26

(54) **HEADEND SOWIE SYSTEM UND VERFAHREN ZUR AUSFALLTOLERANTEN ANBINDUNG VON BREITBAND-POWERLINE-ENDGERÄTEN MITTELS DIESES HEADENDS AN EIN BACKBONE-NETZWERK**
HEADEND AND SYSTEM AND METHOD FOR FAILURE-TOLERANT CONNECTION OF BROADBAND POWER LINE END DEVICES BY MEANS OF THIS HEADEND TO A BACKBONE NETWORK
TÊTE DE BUS ET SYSTÈME ET PROCÉDÉ DE LIAISON RÉSISTANTE À LA DÉFAILLANCE D'APPAREILS D'EXTRÉMITÉ DE LIGNE DE TRANSPORT D'ÉNERGIE - LARGE BANDE À L'AIDE DE LADITE DE TÊTE DE BUS DANS UN RÉSEAU PRINCIPAL

(30) Priorität: 25.04.2014 DE 102014207838; 02.06.2014 DE 102014210336
(43) Veröffentlichungstag der Anmeldung: 28.10.2015
(73) Patentinhaber: Power Plus Communications AG, 68167 Mannheim (DE)
(72) Erfinder: Flicker, Jürgen, 69259 Wilhelmsfeld (DE)
(74) Vertreter: Patent- und Rechtsanwälte Ullrich & Naumann

(56) Entgegenhaltungen:
- US-A1- 2009 213 730
- US-A1- 2012 126 790

## Beschreibung

Die Erfindung betrifft ein Headend zum Bereitstellen einer Kommunikation zwischen Breitband-Powerline-Endgeräten - BPL-Endgeräten - und einem Backbone-Netzwerk, wobei das Headend eine BPL-Schnittstelle zur Kommunikation mit den BPL-Endgeräten und eine Uplink-Schnittstelle zur Kommunikation mit dem Backbone-Netzwerk aufweist, wobei sich die BPL-Endgeräte über die BPL-Schnittstelle mit dem Headend verbinden, wobei das Headend in einem Normalbetrieb verbundene BPL-Endgeräte verwaltet und Datenpakete zwischen den verbundenen BPL-Endgeräten und dem Backbone-Netzwerk weiterleitet.

Die Erfindung betrifft ferner ein System mit ausfalltoleranter Anbindung von BPL-Endgeräte über eines von mindestens zwei Headends an ein Backbone-Netzwerk, wobei die Headends untereinander über das Backbone-Netzwerk verbunden sind, wobei sich mehrere BPL-Endgeräte mit jeweils einem der Headends verbinden und wobei jedes Headend Datenpakete zwischen dem Backbone-Netzwerk und den verbundenen BPL-Endgeräten weiterleitet.

Des Weiteren betrifft die Erfindung ein Verfahren zur ausfalltoleranter Anbindung von BPL-Endgeräte über eines von mindestens zwei Headends an ein Backbone-Netzwerk, wobei jedes Headend in einem Normalbetrieb mehrere mit dem Headend über BPL verbundene BPL-Endgeräte verwaltet, wobei jedes Headend im Normalbetrieb Datenpakete zwischen dem Backbone-Netzwerk und den verbundenen BPL-Endgeräten weiterleitet.

Powerline Communication (PLC) hat sich in den vergangenen Jahren zu einer wichtigen Technologie zur Übertragung von Daten entwickelt. Da bei PLC die Daten auf bestehende Leitungen des Stromversorgungsnetzwerkes moduliert werden, entfällt die Notwendigkeit einer Bereitstellung dedizierter Leitungen für einen Datenaustausch mit Endgeräten. Eine einfache Verbindung zu dem Energieversorgungsnetzwerk genügt. Dadurch können Endgeräte meist ohne allzu großen Aufwand Datenpakete senden oder empfangen.

Herkömmliche Schmalband PLC-Systeme nutzen üblicherweise ein Frequenzband zwischen 3 bis 95 kHz und werden insbesondere für Rundsteueraufgaben innerhalb von Energieversorgungsnetzwerken nach wie vor intensiv genutzt. Zur Übertragung größerer Datenmengen steht die Breitband-Powerline-Technik (BPL-Technik) zur Verfügung. BPL nutzt üblicherweise einen Frequenzbereich zwischen etwa einem und 30 MHz. Die Daten werden auf einzelne Subträger moduliert und über die Stromversorgungsleitungen übertragen. Mit den derzeit bekannten Techniken lassen sich - bei idealen Bedingungen - Übertragungsraten bis in den dreistelligen Mbit/sec-Bereich realisieren. BPL eignet sich nicht nur für die Übertragung von Daten innerhalb von Gebäuden sondern auch zum Austausch von Daten zwischen einem Endgerät innerhalb eines Gebäudes und einem Punkt außerhalb des Gebäudes, beispielsweise einer Trafostation. Auf diese Weise können beispielsweise intelligente Verbrauchszähler - sogenannte Smart-Meter - Messwerte für den Stromverbrauch aus einem Gebäude heraus zu dem Energieversorger übertragen oder es kann eine Verbindung zum Internet bereitgestellt werden.

BPL-Netze sind in Form von Zellen organisiert. Zentrale Einheit einer Zelle ist ein Headend. Dort laufen alle Daten aus der Zelle zusammen. Ein BPL-Endgerät, das Daten über das BPL-Netzwerk übertragen möchte, meldet sich bei einem erreichbaren Headend an und ist nach erfolgreicher Anmeldung mit dem Headend verbunden. Zu diesem Zweck hat das Headend eine BPL-Schnittstelle, mit der ein Datenaustausch über das BPL-Netzwerk ermöglicht wird. Gleichzeitig hat das Headend eine Uplink-Schnittstelle, über die Datenpakete mit einem Backbone-Netzwerk ausgetauscht werden können. Jedes Headend verwaltet in einem Normalbetrieb die verbundenen Endgeräte. Diese Verwaltungsfunktion kann beispielsweise das Kontrollieren der dem Headend zugeordneten BPL-Repeater und BPL-Gateways in seiner BPL-Zelle, das Steuern von BPL-Funktionen von BPL-Endgeräte, das Übertragen von Konfigurationen oder Firmware-Updates an BPL-Endgeräte, das Synchronisieren der Zeit in den BPL-Endgeräten oder das Abfragen von Fehlermeldungen umfassen. Zudem bildet das Headend ein Gateway zwischen dem BPL-Netzwerk und dem Backbone-Netzwerk. In einem Normalbetrieb leitet das Headend Datenpakete von den verbundenen BPL-Endgeräten an das Backbone-Netzwerk weiter und umgekehrt. Das Backbone-Netzwerk stellt Verbindungen zu anderen Headends und gegebenenfalls zu anderen Netzwerken her, beispielsweise dem Internet oder einem Local Area Network (LAN) des Energieversorgers.

Problematisch bei den aus der Praxis bekannten PLC-Systemen ist, wenn ein Headend seine Verbindung zu dem Backbone-Netzwerk verliert. Dies kann beispielsweise durch einen technischen Defekt der Uplink-Schnittstelle oder eine Beschädigung der Verbindung zum Backbone-Netzwerk (z.B. bei Kabeldurchtrennung bei Baggerarbeiten) verursacht werden. In solchen Fällen kann das Headend zwar noch Verbindungen zu den einzelnen BPL-Endgeräten aufrechterhalten und Datenpakete über die BPL-Schnittstelle empfangen. Allerdings können die empfangenen Datenpakete nicht mehr über das Backbone-Netzwerk weitergereicht werden. In diesen Fällen kommt es zu einer Blockade des Teils des BPL-Netzwerks, der durch das Headend verwaltet wird. In der Praxis wird daher aus dem Backbone-Netzwerk heraus regelmäßig überprüft, ob ein Headend erreichbar ist. Sollte ein Headend nicht mehr erreichbar sein, wird ein Alarm im Netzwerkverwaltungssystem (NMS) ausgelöst und - meist unter erheblichem Zeitdruck - das Problem analysiert und händisch behoben. Eine automatische Reaktion auf Ausfälle ist nicht vorgesehen. Dies kann zu länger anhaltenden Ausfällen führen.

Die US 2012/0126790 A1 beschreibt verschiedenste Aspekte eines SmartMeter-Systems. Das in den Figuren 1A und 1B dargestellte System umfasst ein Mittelspannungsnetz, ein Niederspannungsnetz und ein Glasfaser-/Funknetzwerk. In dem Niederspannungsnetz ist eine Vielzahl von elektronischen Stromzählern angeordnet, die jeweils einen Energieverbrauch messen und Messwerte speichern. Über ein BPL-Gateway können die Stromzähler mit einem Headend kommunizieren. Das Headend ist über ein Backbone-Netzwerk und das Mittelspannungsnetz bzw. das Glasfaser-/Funknetzwerk mit mehreren derartigen BPL-Gateways verbunden. Das Headend sammelt und speichert die Messdaten der Stromzähler und kann die Stromzähler verwalten und einzelne Funktionen steuern.

Die US 2009/0213730 A1 offenbart ein Verfahren und ein System zum Handhaben eines Ausfalls einer drahtgebundenen Netzwerkverbindung zwischen einem ersten Access Point und einem Backhaul-Netzwerk. Der Access Point weist ein erstes und ein zweites Funkteil auf. Wenn ein Ausfall der Verbindung zum Backhaul-Netzwerk detektiert wird, wird das zweite Funkteil in einen Uplink-Modus umgeschaltet und eine Funkverbindung zu einem benachbarten Access Point aufgebaut. Nach erfolgtem Verbindungsaufbau zwischen dem ersten Access Point und dem benachbarten Access Point sendet der erste Access Point seine Uplink-Daten über die Funkverbindung zu dem benachbarten Access Point, der wiederum die empfangenen Daten über seine drahtgebundenen Verbindung zum Backhaul-Netzwerk sendet.

Der vorliegenden Erfindung liegt daher die Aufgabe zugrunde, ein Headend, ein System und ein Verfahren der eingangs genannten Art derart auszugestalten und weiterzubilden, dass auch bei Ausfall einer Verbindung zwischen Headend und Backbone-Netzwerk für möglichst viele BPL-Endgeräte automatisch eine Verbindung zu dem Backbone-Netzwerk wiederhergestellt und eine Blockade eines Teils des PLC-Netzwerks vermieden werden kann.

Erfindungsgemäß wird die voranstehende Aufgabe durch die Merkmale des Anspruchs 1 gelöst. Danach ist das in Rede stehende Headend dadurch gekennzeichnet, dass das Headend Mittel zur Detektion des Zustands der Verbindung zu dem Backbone-Netzwerk aufweist und dass das Headend bei Detektion eines Ausfalls der Verbindung zum Backbone-Netzwerks zur Deaktivierung der Verwaltungsfunktion für die verbundenen BPL-Endgeräte ausgebildet ist, wodurch eine durch das Headend verwaltete BPL-Zelle aufgelöst wird.

Hinsichtlich eines Systems ist die voranstehende Aufgabe durch die Merkmale des Anspruchs 7 gelöst. Danach ist das in Rede stehende System dadurch gekennzeichnet, dass mindestens eines der Headends - erstes Headend - entsprechend einem der Ansprüche 1 bis 6 ausgestaltet ist.

Hinsichtlich eines Verfahrens ist die voranstehende Aufgabe durch die Merkmale des Anspruchs 11 gelöst. Danach umfasst das in Rede stehende Verfahren die Schritte:
Überwachen des Zustands der Verbindung zwischen einem der Headends - erstes Headend - und dem Backbone-Netzwerk,
Detektieren eines Ausfalls der Verbindung zwischen dem ersten Headend und dem Backbone-Netzwerk und
Deaktivieren einer Verwaltungsfunktion des ersten Headends, wodurch bisher verbundene BPL-Endgeräte nicht mehr durch das erste Headend verwaltet werden und eine durch das erste Headend verwaltete BPL-Zelle aufgelöst wird.

In erfindungsgemäßer Weise ist zunächst erkannt worden, dass eine Blockade der BPL-Endgeräte, die bei einem Headend mit ausgefallener Verbindung zum Backbone-Netzwerk angemeldet sind, dadurch wirkungsvoll verhindert werden kann, dass proaktiv auf den Ausfall der Verbindung zum Backbone-Netzwerk reagiert wird. Erfindungsgemäß ist hierzu das Headend mit Mitteln zur Detektion des Zustands der Verbindung zu dem Backbone-Netzwerk ausgestattet. Mit diesen Mitteln kann festgestellt werden, ob eine Verbindung zu dem Backbone-Netzwerk besteht und gegebenenfalls wie gut die Qualität der Verbindung in das Backbone-Netzwerk ist. Auf diese Weise kann festgestellt werden, wenn die Verbindung zum Backbone-Netzwerk ausfällt oder qualitativ derart schlecht ist, dass es einem Ausfall gleichkommt.

Wenn ein Ausfall der Verbindung zum Backbone-Netzwerk oder eine qualitativ ungenügende Backbone-Verbindung detektiert wird, wird erfindungsgemäß die Verwaltungsfunktion des Headends abgeschaltet. Auf diese Weise verwaltet das Headend nicht mehr länger die BPL-Zelle und die durch dieses Headend verwaltete BPL-Zelle wird quasi aufgelöst. Dadurch verlieren die verbundenen BPL-Endgeräte automatisch ihre Verbindung zum Headend. Das Headend bleibt dadurch zwar - auch für die BPL-Endgeräte - über BPL erreichbar. Allerdings erfüllt es nicht mehr die eigentliche Aufgabe eines Headend, nämlich das Verwalten der BPL-Zelle und der verbundenen BPL-Endgeräte. Auf diese Weise ist gewährleistet, dass die zuvor mit dem Headend verbundenen BPL-Endgeräte sich ein neues Headend suchen müssen und nicht durch eine bestehende Verbindung zu einem Headend mit ausgefallener Backbone-Verbindung blockiert sind. Zwar kann sich für die betroffenen BPL-Endgeräte durch nicht mehr optimale Kommunikationsbedingungen die verfügbare Datenrate reduzieren und die Latenz erhöhen, allerdings steht ihnen wenigstens eine Verbindung in das Backbone-Netzwerk zur Verfügung und es kann ein Datenaustausch realisiert werden. Dies ist beispielsweise dann von Bedeutung, wenn eine Übertragung von Daten jederzeit wichtig ist, beispielsweise bei einem Smart-Meter. Dadurch können die Fehlersuche und die Fehlerbehebung bei dem Headend mit ausgefallener Backbone-Verbindung mit deutlich weniger Zeitdruck erfolgen, da die BPL-Endgeräte nicht mehr vollständig vom Backbone-Netzwerk getrennt sind. Dies ermöglicht einen effizienteren Betrieb des BPL-Netzes. Da das Deaktivieren der Verwaltungsfunktion für ein BPL-Endgerät wirkt, als wäre das Headend vollständig ausgefallen oder abgeschaltet worden, und BPL-Endgeräte auf diesen Umstand standardmäßig reagieren können, muss an den BPL-Endgeräten keine Veränderung vorgenommen werden. Dies gewährleistet gleichzeitig vollständige Kompatibilität zu den bisher bekannten Headends. In einem Normalbetrieb kann sich das erfindungsgemäße Headend damit wie ein aus dem Stand der Technik bekanntes Headend verhalten, dessen Funktionen in der Beschreibungseinleitung skizziert sind. Bei Ausfall der Verbindung ins Backbone-Netzwerk sind die verbundenen BPL-Endgeräte dennoch nicht blockiert.

Trotz dieser erfindungsgemäßen Maßnahmen ist es denkbar, dass die Topologie des BPL-Netzes nicht engmaschig genug ist, damit jedes BPL-Endgerät ein neues Headend findet. In einer bevorzugten Weiterbildung der Erfindung kann daher gleichzeitig oder zeitnah zur Deaktivierung der Verwaltungsfunktion ein Repeater-Betrieb des Headends aktiviert werden. In diesem Repeater-Betrieb empfängt das Headend über die BPL-Schnittstelle weiterhin Datenpakete. Diese Datenpakete werden aufbereitet (beispielsweise verstärkt, einer Fehlerkorrektur unterzogen, Routing-Informationen ergänzt, etc.) und über die BPL-Schnittstelle wieder ausgesendet. Auf diese Weise kann die Reichweite der BPL-Endgeräte, die bisher mit dem Headend mit ausgefallener Backbone-Verbindung verbunden waren, deutlich vergrößert werden, wodurch einem Abtrennen eines BPL-Endgeräts vom BPL-Netzwerk entgegengewirkt werden kann. Durch das Umschalten in einen Repeater-Betrieb kann der Aufwand bei der Installation von Headends (insbesondere hinsichtlich deren Installationsdichte) auf ein Minimum reduziert werden.

Bei den aus der Praxis bekannten Headends würde sich das Bereitstellen eines Repeater-Betriebs mit der eigentlichen Funktion eines Headends widersprechen. Ein Headend ist eine Senke für Daten aus dem BPL-Netzwerk und eine Quelle für Daten aus dem Backbone-Netzwerk in das BPL-Netzwerk. Das Weiterleiten von Daten aus dem BPL-Netzwerk in das BPL-Netzwerk macht daher keinen Sinn. Durch den Wechsel zwischen Verwaltungsbetrieb und Repeater-Betrieb gemäß der zuvor beschriebenen Weiterbildung der Erfindung können Headend und Repeater in Einklang gebracht werden, so dass das Headend sowohl im Normalbetrieb als auch im Ausfallbetrieb die Funktion des BPL-Netzwerks optimal unterstützen kann.

Zur Implementierung der "Mittel zur Detektion des Zustands der Verbindung zu dem Backbone-Netzwerk" können prinzipiell die verschiedensten Verfahren und Systeme verwendet werden. Geeignete Mittel sind aus der Praxis bekannt. Nachfolgend werden einige bevorzugte Ausgestaltungen dieser Mittel näher betrachtet.

Eine erste bevorzugte Ausgestaltung ist die Verwendung von Testsignalen. Das Headend kann periodisch Testsignale in das Backbone-Netzwerk senden, die durch eine Netzwerkentität im Backbone-Netzwerk empfangen wird. Diese Netzwerkentität erzeugt eine Antwort auf das Testsignal und sendet diese an das Headend zurück. Ein Vorteil dieser Ausgestaltung ist, dass die Verfügbarkeit des Backbone-Netzwerks sowohl in Senderichtung als auch in Empfangsrichtung summarisch ermittelt wird. Zur Implementierung dieser Ausgestaltung wäre beispielsweise die Verwendung eines Pings denkbar. Hierbei kann auch in gewissen Grenzen auf die Qualität der Verbindung geschlossen werden. So kann aus der Antwort auf einen Ping die Laufzeit des Signals ermittelt werden, die wiederum Rückschlüsse auf die Auslastung einer Netzstrecke oder die Anzahl von Sendewiederholungen bei gestörter Übertragung zulässt.

Alternativ oder zusätzlich könnte das Testsignal auch als Rundrufsignal ausgebildet sein, das periodisch von einer Netzwerkintensität im Backbone-Netzwerk ausgesendet wird. Auf diese Weise würde eine Art Heart-Beat-Signal bereitgestellt. Wenn ein Headend dieses Heart-Beat-Signal nicht mehr empfängt, kann auf einen Ausfall der Backbone-Verbindung geschlossen werden. Bevor Schritte zur Deaktivierung der Verwaltungsfunktion bei dem Headend in die Wege geleitet werden, könnte nochmals aktiv die Verfügbarkeit der Verbindung überprüft werden, um sicherzustellen, dass nicht die Netzwerkentität zur Erzeugung der periodischen Testsignale oder deren Verbindung zum Backbone-Netzwerk ausgefallen ist. Denkbar wäre in diesem Kontext, ein Testsignal in das Backbone-Netzwerk zu senden.

Eine andere bevorzugte Ausgestaltung des Mittels zur Detektion des Zustands der Backbone-Verbindung, das ergänzend oder alternativ zu Testsignalen verwendet werden könnte, besteht in der Nutzung eines Timers. Über jede Netzwerkverbindung werden üblicherweise in relativ kurzen Zeitabständen - oft wenige Sekunden oder darunter - Datenpakete versendet und empfangen. Dies sind Datenpakete von den einzelnen Geräten im Netzwerk, aber auch Rundrufpakete, wie beispielsweise über die Uplink-Schnittstelle empfangene UDP (User Datagram Protocol)-Pakete. Können derartige Datenpakete über die Uplink-Schnittstelle über gewisse Zeit nicht mehr erfolgreich versendet und/oder empfangen werden, deutet dies auf eine Störung der Backbone-Verbindung, also der Verbindung des Headends zum Backbone-Netzwerk, hin. Der Timer könnte immer dann zurückgesetzt werden, wenn ein Datenpaket erfolgreich versendet und/oder empfangen worden ist. Dabei könnte sowohl für die Sende- als auch die Empfangsrichtung ein eigener Timer vorgesehen sein. Allerdings kann auch ein Timer die Zeiten für beide Richtungen erfassen. Sofern die durch den/die Timer gemessene Zeitspanne einen vordefinierten Grenzwert überschreitet, könnte auf den Ausfall der Backbone-Verbindung geschlossen werden. Die Wahl des Grenzwertes dürfte dabei vor allem von der Auslastung des Netzes (und damit der üblichen Häufigkeit von gesendeten oder empfangenen Datenpaketen) oder den Anforderungen der BPL-Endgeräte an die Verfügbarkeit abhängen.

Wenn die Verbindung zum Backbone-Netzwerk verfügbar ist und in ausreichender Qualität genutzt werden kann, kann das erfindungsgemäße Headend wie ein aus der Praxis bekanntes Headend genutzt werden. Das Headend verwaltet dann die verbundenen BPL-Endgeräte in Form einer Zelle. Das Headend würde periodisch Mitteilungen über die BPL-Schnittstelle aussenden, mit denen die Bereitschaft zur Verwaltung von Endgeräten signalisiert wird. Jedes BPL-Endgerät, das eine entsprechende Mitteilung empfängt, kann entscheiden, ob das Headend, mit dem das BPL-Endgerät aktuell verbunden ist, besser für eine Verbindung in das Backbone-Netzwerk geeignet ist als das Headend, von dem soeben die Mitteilung empfangen worden ist. Je nach Ergebnis dieser Entscheidung würde das BPL-Endgerät entweder bei dem aktuellen Headend angemeldet bleiben oder würde ein Wechsel zu dem neuen Headend initiieren. Auf diese Weise lässt sich auch bei dem erfindungsgemäßen Headend eine Laststeuerung durchführen und es können Headends aus dem BPL-Netzwerk entfernt oder neue Headends in das BPL-Netzwerk integriert werden. Das BPL-Netzwerk muss damit für die Integration eines erfindungsgemäßen Headends praktisch nicht verändert werden. Wenn ein erfindungsgemäßes Headend verwendet wird, dürfte allerdings - insbesondere bei einem aktivierbaren Repeater-Betrieb - eine Reduzierung der Headenddichte im BPL-Netzwerk möglich werden.

Entsprechend einer bevorzugten Ausgestaltung ist die BPL-Schnittstelle des Headends zur Übertragung von BPL-Signalen über ein Niederspannungsnetzwerk ausgebildet. Unter Niederspannung werden Wechselspannungen mit einem Effektivwert von bis zu 1000 V angesehen. Der häufigste Vertreter eines Niederspannungsnetzwerkes ist das in Europa weit verbreitete 230 V-Netzwerk bzw. das in den USA übliche 120 V-Netzwerk. Zur Übertragung von BPL über das Niederspannungsnetzwerk werden geeignet ausgestaltete Koppelvorrichtungen verwendet, mit denen die hochfrequenten BPL-Signale an die Stromversorgungsleitungen gekoppelt werden. Üblicherweise sind diese Koppeleinrichtungen durch Kondensatoren und/oder Übertrager gebildet. Eine denkbare Lokalisierung eines derartigen Headends wäre beispielsweise in einer Transformatorstation, die ein geografisches Gebiet mit Niederspannung versorgt.

Die Uplink-Schnittstelle des Headends kann auf verschiedene Weise ausgestaltet sein. Bevorzugt wird hierbei ebenfalls BPL verwendet, wobei hier vorzugsweise BPL für Mittelspannungsebenen zum Einsatz kommt. Unter Mittelspannung werden üblicherweise Wechselspannungen mit einem Effektivwert zwischen 1000 V und einschließlich 52 kV verstanden. Mittelspannungen werden üblicherweise dazu verwendet, um eine Verbindung zu Transformatorstation oder Großverbrauchern meist über größere Distanzen herzustellen. Durch Verwendung von BPL auf Mittelspannungsebene können damit relativ einfach große Distanzen abgedeckt werden, da das zugehörige Stromnetz recht ausgedehnt ist.

Andere mögliche Ausgestaltungen für die Uplink-Schnittstelle sind DSL (Digital Subscriber Line)-Varianten, wie beispielsweise ADSL (asynchrones DSL), SDSL (synchrones DSL) oder VDSL (Very High Speed DSL). Denkbar ist auch die Verwendung eines MAN (Metropolitan Area Network), wobei hierbei ebenso Kupferkabel als Übertragungsmedium in Frage kommen wie Glasfaser und wobei das MAN durch die verschiedensten Technologien (beispielsweise Ethernet oder SDH (Synchrone Digitale Hierarchie)) implementiert sein kann. Prinzipiell können auch andere Weitbereichsschnittstellen mit den Übertragungsmedien Kupferkabel, Lichtwellenleiter und/oder Funk die Uplink-Schnittstelle bilden. Entsprechende Schnittstellen sind aus der Praxis bekannt. Besonders bevorzugt ist jedoch die Verwendung von BPL.

In einer bevorzugten Ausgestaltung kommen zur Übertragung der Datenpakete über das BPL-Netzwerk und/oder das Backbone-Netzwerk gebräuchliche Netzwerkprotokolle zum Einsatz. Bevorzugt wird dabei IP (Internet Protocol), meist in Verbindung mit TCP (Transmission Control Protocol) verwendet.

Als BPL-Endgeräte, die sich mit dem erfindungsgemäßen Headend verbinden können, sind die verschiedensten Geräte denkbar, die BPL beherrschen. Beispiele sind BPL-Modems (z.B. zum Verbinden eines LAN (Local Area Network) mit BPL), BPL-Gateways (zum Verbinden von Nahbereichsschnittstellen (z.B. M-Bus, Wireless M-Bus, RS485 oder RS232) mit BPL) oder intelligente Verbrauchszähler.

Ein erfindungsgemäßes System umfasst mindestens zwei Headends, die untereinander über das Backbone-Netzwerk verbunden sind. Mehrere BPL-Endgeräte können sich über das BPL-Netzwerk jeweils mit einem der Headends, eventuell auch mit mehreren Headends verbinden. Jedes Headend verwaltet die verbundenen BPL-Endgeräte in Form einer Zelle und leitet Datenpakete zwischen dem Backbone-Netzwerk und den verbundenen BPL-Endgeräten weiter. Um eine BPL-Zelle ausfallsicher gegenüber dem Ausfall der Backbone-Verbindung zu machen, genügt es, das Headend dieser Zelle gegen ein erfindungsgemäßes Headend auszutauschen. Es wäre möglich, lediglich eines oder einzelne Headends des BPL-Netzes gegen ein erfindungsgemäßes Headend auszutauschen. Zur Vereinfachung des Betriebs des BPL-Netzes sind jedoch vorzugsweise alle Headends des BPL-Netzes durch ein erfindungsgemäßes Headend implementiert.

Bei Implementierung eines erfindungsgemäßen Headends mit Repeater-Funktion würde dieses Headend Datenpakete von BPL-Endgeräten im Empfangsradius empfangen, aufbereiten und über die BPL-Schnittstelle wieder aussenden. Auf diese Weise kann die Reichweite eines BPL-Endgeräts vergrößert werden und ein von dem Ausfall betroffenes BPL-Endgerät kann sich gegebenenfalls mit einem anderen Headend über diesen neu geschaffenen Repeater verbinden. Zwar vergrößern sich dadurch die Latenzzeiten und das/die verbleibende/n Headend/s könnte/n durch sehr viele zu handhabende Endgeräte stark belastet sein, allerdings kann für die meisten, wenn nicht sogar für alle der BPL-Endgeräte eine Kommunikationsfähigkeit aufrechterhalten werden.

Bei Verwendung eines oder mehrerer derart ausgestalteter Headends kann die Wahl des eingesetzten Headends ergänzend von der Netzwerk-Topologie abhängig gemacht werden. Bei ausreichend dicht beieinanderliegenden Headends ist es beispielsweise möglich, dass ein BPL-Endgerät sich ohne die Repeater-Funktion des erfindungsgemäßen Headends mit einem anderen Headend verbinden kann. In Netzabschnitten mit ausreichend dicht beieinanderliegenden Headends könnten daher erfindungsgemäße Headends eingesetzt werden, die den Ausfall der Backbone-Verbindung erkennen und ihre Verwaltungsfunktion deaktivieren können, allerdings nicht als Repeater betrieben werden können. In BPL-Netzabschnitten, bei denen die Headends relativ weit auseinanderliegen und nicht alle BPL-Endgeräte der Zelle in der Lage wären, bei Deaktivieren der Verwaltungsfunktion ein anderes Headend zu erreichen, könnte hingegen ein erfindungsgemäßes Headend mit Repeater-Funktion eingesetzt werden. Insofern ist ein relativ weitreichender Mischbetrieb möglich.

Vorzugsweise ist in dem erfindungsgemäßen System ein Netzwerkverwaltungssystem (NMS) vorgesehen, in dem die einzelnen im BPL-Netzwerk vorhandenen Geräte registriert sind und der Status der jeweiligen Geräte hinterlegt ist. Das NMS ist dabei vorzugsweise im Backbone-Netzwerk angeordnet. Unter Verwendung des NMS kann ein Administrator den Status eines BPL-Endgerätes innerhalb des BPL-Netzwerks überprüfen. Zu den verfügbaren Informationen kann gehören, an welchem Headend ein BPL-Endgerät angemeldet ist. Bei den aus der Praxis bekannten NMS sind die verfügbaren Informationen häufig als Baumstruktur dargestellt. Bei Ausfall eines Headends wird der zugehörige Zweig (Headend und verbundene BPL-Endgeräte) entsprechend gekennzeichnet, beispielsweise durch Änderung des Symbols für die Geräte.

In dem NMS kann für ein erfindungsgemäßes Headend ein eigener Gerätetyp vorgesehen sein, wobei sich in dem Gerätetyp auch die Möglichkeit eines Repeater-Betriebs widerspiegeln kann. Damit kann das NMS sowohl den Zustand des BPL-Netzwerkes protokollieren, als auch Aussagen über die aktuelle Netzwerkstruktur machen. Dies ermöglicht, Warnungen auszugeben, wenn beispielsweise bei einem Headend die Backbone-Verbindung ausgefallen ist.

Für das Hinterlegen des Status kann vorgesehen sein, dass die Headends regelmäßig oder bei wichtigen Zustandsänderungen ihren Status, ihre Nachbarknoten, insbesondere benachbarte Headends, verbundene BPL-Geräte und deren jeweilige Verbindungsqualitäten und/oder genutzte Routen an der NMS melden. Sofern sich ein Headend in einem Normalbetrieb befindet, in dem die Verbindung zum Backbone-Netzwerk nutzbar ist, kann diese Meldung über die Uplink-Schnittstelle erfolgen. Sofern die Backbone-Verbindung ausgefallen ist, kann ein erfindungsgemäßes Headend (ob mit oder ohne Repeater-Funktionalität) die Statusmeldungen über das BPL-Netzwerk und ein andere Headend in das Backbone-Netzwerk übertragen. Das NMS kann auch zur Konfiguration von Geräten im BPL-Netzwerk ausgestaltet sein. So kann das NMS beispielsweise eine dynamische IP-Adresse an ein Headend im Repeater-Betrieb übermitteln.

Wenn ein erfindungsgemäßes Headend mit Repeater-Funktion in den Repeater-Betrieb wechselt, so kann es sich bei einem anderen Headend als Repeater anmelden. Das NMS erkennt in diesem Fall, dass ein erfindungsgemäßes Headend in den Repeater-Betrieb gewechselt ist, und kann das erfindungsgemäße Headend im Repeater-Betrieb in der Baumstruktur unter dem nun verwaltenden Headend einsortieren. Das derart erkannte Headend kann mit einem neuen Logo in der Baumstruktur dargestellt werden. Alle BPL-Endgeräte, die sich mit einem anderen funktionierenden Headend verbinden, werden unter diesem neuen Headend in der Baumstruktur eingeordnet. Es kann jedoch auch BPL-Endgeräte geben, die sich nicht mit einem neuen HE verbinden können oder dies noch nicht getan haben. Diese BPL-Endgeräte befinden sich zunächst in einem undefinierten Zustand, da das zugehörige Headend nicht mehr vorhanden ist. Zur übersichtlich Darstellung können diese BPL-Endgeräte unter dem erfindungsgemäßen Headend im Repeater-Betrieb einsortiert bleiben und hätten somit eine definierte Zuordnung.

Neben einer Verbindung zwischen den einzelnen Headends des Systems kann das Backbone-Netzwerk auch eine Verbindung zu einem anderen Netzwerk herstellen. Denkbar wäre hierbei beispielsweise das Internet oder ein Netzwerk des Energieversorgers. So kann beispielsweise ein Smart-Meter über das BPL-Netzwerk Messwerte an ein Headend und von dort aus über das Backbone-Netzwerk und das LAN des Energieversorgers an einen Abrechnungsserver senden. Gemäß einem anderen Anwendungsbeispiel verbindet sich ein Nutzer über das Internet, das Backbone-Netzwerk, ein Headend und das BPL-Netzwerk mit einem Smart-Meter-Gateway und fragt dort aktuelle Messwerte oder Statusmeldungen ab.

In dem System können ein oder mehrere weitere Repeater vorgesehen sein, über den/die ein Datenpaket zwischen BPL-Endgerät und der BPL-Schnittstelle eines Headends geleitet wird. Hierbei kann jedes BPL-Endgerät selbst als Repeater genutzt werden. Dies würde die Reichweite innerhalb des BPL-Netzes noch weiter steigern.

Bei Aktivierung des Repeater-Betriebs bei einem Headend gemäß einer Ausgestaltung der Erfindung kann das Headend einer Rekonfiguration unterzogen werden. Denkbar wäre beispielsweise die Vergabe einer neuen IP-Adresse. Während Headends üblicherweise mit statischen IP-Adressen konfiguriert sind, kann bei Aktivierung des Repeater-Betriebs eine dynamische IP-Adresse vergeben werden. Gleichzeitig können in das Headend im Repeater-Betrieb Netzwerk-Policies installiert werden, beispielsweise bestimmte Routing-Regeln. Die Konfigurationsdaten können sowohl von "außen" (d.h. aus dem Netzwerk, beispielsweise dem Backbone-Netzwerk) kommen oder können bereits in dem Headend gespeichert sein.

Sofern ein Ausfall der Backbone-Verbindung detektiert worden und das Headend gegebenenfalls in den Repeater-Betrieb gewechselt ist, kann weiterhin die Backbone-Verbindung hinsichtlich einer erneuten Statusänderung überwacht werden. Hierbei kann auch aktiv begünstigend Einfluss genommen werden. So wäre beispielsweise denkbar, dass bei Implementierung des Backbone-Netzes durch DSL ein DSLAM (DSL Access Multiplexer) ausgefallen und dadurch die Backbone-Verbindung zusammengebrochen ist. In diesem Fall kann periodisch ein neuer Verbindungsaufbau initiiert werden. Auch bei anderen Implementierungen des Backbone-Netzes kann aktiv ein Rücksetzen der Verbindung zum Backbone vorgenommen werden. Je nach Implementierung kann die Periodendauer unterschiedlich sein. Mögliche Periodendauern für das Rücksetzen wären beispielsweise 5 Minuten oder einmal pro Stunde.

Sobald die Verbindung zwischen dem Headend mit ausgefallener Backbone-Verbindung - nachfolgend als erstes Headend bezeichnet - wieder hergestellt ist, kann die Verwaltungsfunktion des ersten Headends wieder aktiviert werden. Gleichzeitig würde (sofern zuvor aktiviert) die Repeater-Funktion deaktiviert, da diese den Normalbetrieb des Headends behindern würde. Sobald die Verwaltungsfunktion wieder aktiv ist, könnte das Headend Mitteilungen über die BPL-Schnittstelle aussenden, mit dem die Bereitschaft für die Herstellung von Verbindungen mit BPL-Endgeräten signalisiert wird. Wenn ein BPL-Endgerät detektiert, dass das erste Headend zur Weiterleitung von Datenpaketen besser geeignet ist als das bisher genutzte Headend, könnte das BPL-Endgerät ein Wechsel auf das erste Headend initiieren und damit die Datenpakete zukünftig über das erste Headend an das Backbone-Netzwerk leiten. Auf diese Weise entsteht ein System, bei dem automatisch sowohl auf einen Ausfall der Backbone-Verbindung als auch auf deren Widerherstellung reagiert werden kann.

Es gibt nun verschiedene Möglichkeiten, die Lehre der vorliegenden Erfindung in vorteilhafter Weise auszugestalten und weiterzubilden. Dazu ist einerseits auf die den Ansprüchen 1, 7 und 11 jeweils nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung eines Systems mit zwei Headends und einem Backbone-Netzwerk in einem Normalbetrieb,
- Fig. 2: eine schematische Darstellung eines ersten Ausführungsbeispiels eines erfindungsgemäßen Systems mit erfindungsgemäßen Headend,
- Fig. 3: eine schematische Darstellung des Systems nach Fig. 2, bei dem sich BPL-Endgeräte nach einer Zwangstrennung wieder mit einem erreichbaren Headend verbinden,
- Fig. 4: eine schematische Darstellung eines zweiten Ausführungsbeispiels eines erfindungsgemäßen Systems mit einem erfindungsgemäßen Headend mit aktivierbarem Repeater-Betrieb und
- Fig. 5: ein Blockschaltbild verschiedener Funktionsblöcke eines Ausführungsbeispiels eines erfindungsgemäßen Headends.

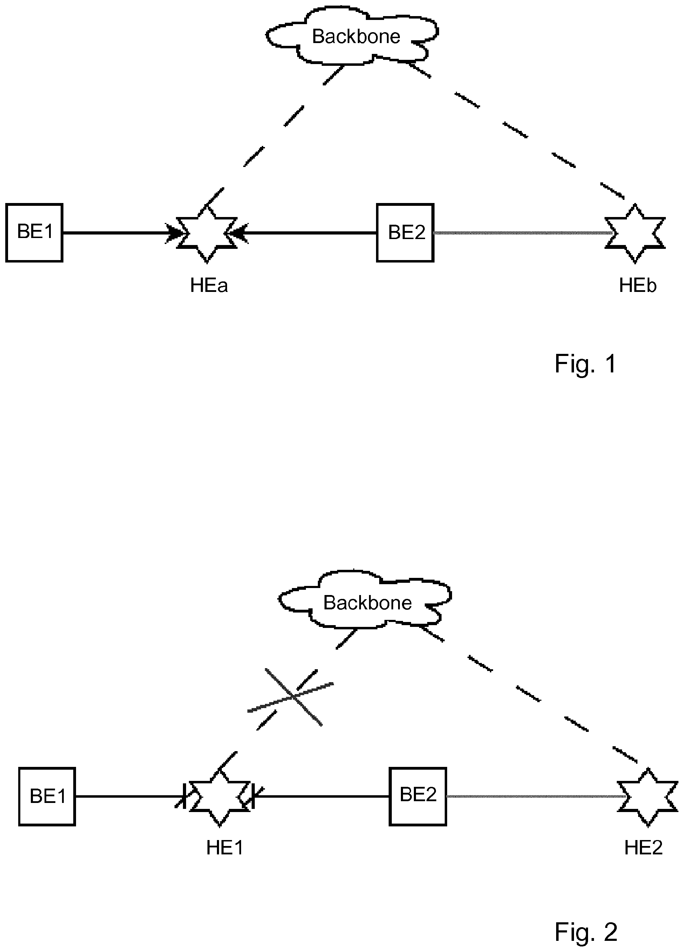

Fig. 1 zeigt einen typischen Aufbau eines Systems, wie es in der Praxis häufig verwendet wird. Das System umfasst zwei Headends HEa und HEb, die untereinander mit einem Backbone-Netzwerk verbunden sind. Das Backbone-Netzwerk ist symbolisch als Wolke dargestellt und kann Verbindungen zu weiteren Headends oder weiteren Netzwerken aufweisen. In Fig. 1 sind ferner zwei BPL-Endgeräte BE1 und BE2 eingezeichnet, die sich mit einem der Headends HEa oder HEb verbinden. In dem in Fig. 1 dargestellten Betrieb sind beide BPL-Endgeräte BE1 und BE2 mit dem ersten Headend HEa verbunden (durch einen Pfeil symbolisiert). Die prinzipiell mögliche Verbindung zwischen dem BPL-Endgerät BE2 und dem Headend HEb wird nicht genutzt. Jedes Datenpaket, das von einem der BPL-Endgeräte BE1 oder BE2 an das Backbone-Netzwerk gesendet werden soll, wird vom BPL-Endgerät in das BPL-Netzwerk gesendet und vom Headend (HEa oder HEb), mit dem das BPL-Endgerät verbunden ist, empfangen. Dieses Headend leitet das empfangene Datenpaket in das Backbone-Netzwerk weiter. Umgekehrt werden Datenpakete, die für ein bestimmtes BPL-Endgerät bestimmt sind, an das Headend übertragen, mit dem das entsprechende BPL-Endgerät verbunden ist. Hierzu können im Backbone-Netzwerk entsprechende Routing-Funktionen implementiert sein, um ein unnötiges Senden von Datenpaketen an alle Headends zu vermeiden. Das Headend empfängt das Datenpaket über die Uplink-Schnittstelle, setzt dieses auf ein oder mehrere BPL-Datenpakete um und sendet das/die BPL-Datenpaket/e über die BPL-Schnittstelle an das jeweilige BPL-Endgerät weiter. Auf diese Weise bildet das Headend eine Schnittstelle zwischen BPL-Endgerät und dem Backbone-Netzwerk. Das Headend kann hinsichtlich der Weiterleitungsfunktion als transparenter Gateway betrachtet werden. Das Verhalten dieses Systems entspricht auch dem Normalbetrieb des erfindungsgemäßen Systems.

Wenn für ein Headend HEa oder HEb die Verbindung zum Backbone-Netzwerk ausfällt, senden die BPL-Endgeräte weiterhin Daten an das Headend, mit dem sie verbunden sind, erhalten aber - verständlicher Weise - keine Rückmeldung aus dem Backbone-Netzwerk. Aus dem Backbone-Netzwerk wird der Zustand fortwährend überwacht. Wird festgestellt, dass ein Headend nicht mehr aus dem Backbone-Netzwerk erreichbar ist, wird durch ein Techniker die Ursache gesucht.

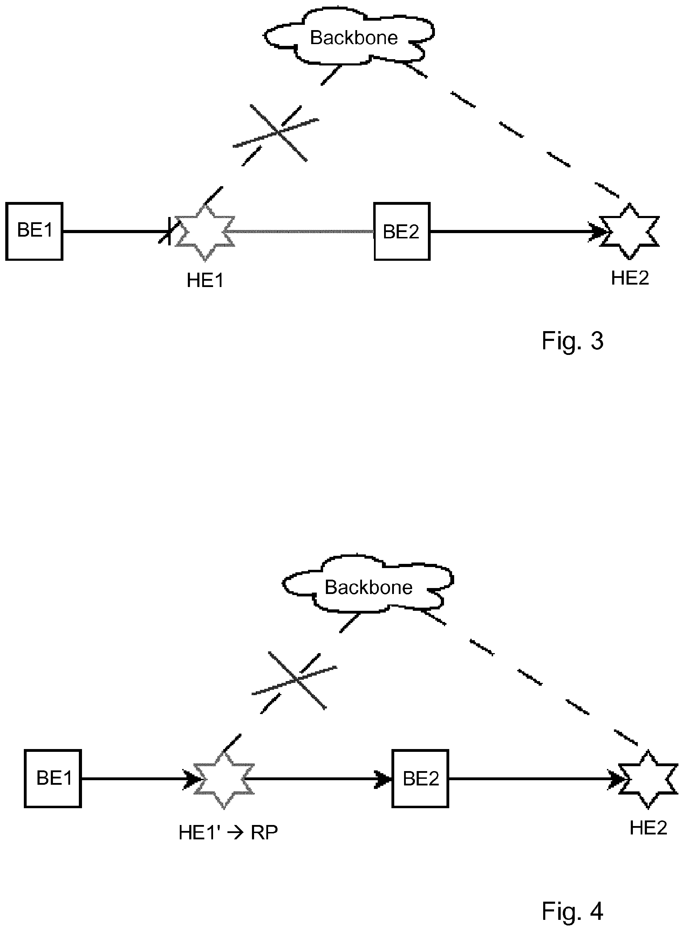

In Fig. 2 ist ein erstes Ausführungsbeispiel eines erfindungsgemäßen Systems dargestellt, das auf einen Ausfall einer Backbone-Verbindung automatisch reagieren kann. Vom schematischen Aufbau her betrachtet gleicht das erfindungsgemäße System weitgehend dem aus dem Stand der Technik bekannten System. Allerdings ist mindestens eines der Headends - in Fig. 2 zumindest Headend HE1 (nachfolgend auch als erstes Headend bezeichnet) - durch ein erfindungsgemäßes Headend gebildet. In dem in Fig. 2 dargestellten Beispiel fällt die Verbindung zwischen Headend HE1 und dem Backbone-Netzwerk aus. Das betroffene Headend HE1 detektiert den Ausfall und deaktiviert seine Verwaltungsfunktion. Dies führt zu einer Zwangstrennung der verbundenen BPL-Endgeräte, im Beispiel der Fig. 2 die BPL-Endgeräte BE1 und BE2. Die zwangsgetrennten BPL-Endgeräte versuchen dann eine Verbindung zu einem anderen erreichbaren Headend herzustellen. Ein entsprechendes Verhalten ist in Fig. 3 dargestellt. Das BPL-Endgerät BE2 verbindet sich mit dem zweiten erreichbaren Headend HE2 und erhält damit wieder eine Verbindung zum Backbone-Netzwerk. Für BPL-Endgerät BE1 ist das Headend HE2 jedoch außerhalb seiner Reichweite, so dass das BPL-Endgerät BE1 keine Verbindung in das Backbone-Netzwerk erhält bis das Headend HE2 wieder in Betrieb ist.

Dies wird bei dem erfindungsgemäßen Headend gemäß dem zweiten Ausführungsbeispiel behoben, indem bei Detektieren eines Ausfalls der Backbone-Verbindung die Verwaltungsfunktion des Headends deaktiviert und gleichzeitig (oder zumindest zeitnah) ein Repeater-Betrieb aktiviert wird. Wie bei dem zuvor beschriebenen Beispiel umfasst das System ein Backbone-Netzwerk, über das zwei Headend verbunden sind, nachfolgend auch als erstes Headend HE1' und zweites Headend HE2 bezeichnet. Mindestens eines dieser Headends, nämlich Headend HE1', ist entsprechend der Erfindung ausgestaltet. Das zweite Headend HE2 kann ebenfalls erfindungsgemäß ausgebildet sind. Allerdings könnte hier auch ein "normales" Headend verwendet sein.

Zwei BPL-Endgeräte BE1 und BE2 können sich mit einem der beiden Headends HE1' und HE2 verbinden. Nachfolgend wird davon ausgegangen, dass die Verbindung zwischen dem erstes Headend HE1' und dem Backbone-Netzwerk ausfällt. Das erste Headend HE1' detektiert diesen Ausfall und deaktiviert seine Verwaltungsfunktion. Dies kommt einer Zwangstrennung gleich. Mit dem Deaktivieren der Verwaltungsfunktion wird - zeitgleich oder zumindest zeitnah - ein Repeater-Betrieb aktiviert. Auf diese Weise kann das erste Headend HE1' im Repeater-Betrieb Datenpakete empfangen und weiterleiten.

Das Verhalten des Systems im Repeater-Betrieb wird nachfolgend im Zusammenhang mit Fig. 4 näher betrachtet. Die Tatsache, dass sich HE1' im Repeater-Betrieb befindet, ist durch "HE1' → RP" verdeutlicht. In dem in Fig. 4 dargestellten Beispiel empfängt das erste Headend HE1' ein Datenpaket von BPL-Endgerät BE1. Dieses Datenpaket wird durch das erste Headend HE1' aufbereitet und wieder in das BPL-Netzwerk ausgesendet. Dieses Datenpaket gelangt zu BPL-Endgerät BE2, das ebenfalls eine Repeater-Funktion hat, d.h. ein über das BPL-Netzwerk empfangenes Datenpaket wird aufbereitet und weiterleitet, wenn der Inhalt des Datenpakets nicht für das Endgerät BE2 bestimmt ist. Das durch das BPL-Endgerät BE2 weitergeleitete Datenpaket kann dann Headend HE2 erreichen, wird dort über dessen BPL-Schnittstelle empfangen und über die Uplink-Schnittstelle in das Backbone-Netzwerk weitergeleitet. Auf diese Weise wird ein Datenpaket von BPL-Endgerät BE1 über das erste Headend HE1' im Repeater-Betrieb und BPL-Endgerät BE2 an das zweite Headend HE2 weitergeleitet und es kann sichergestellt werden, dass das BPL-Endgerät BE1 eine Verbindung zum Backbone-Netzwerk herstellen kann.

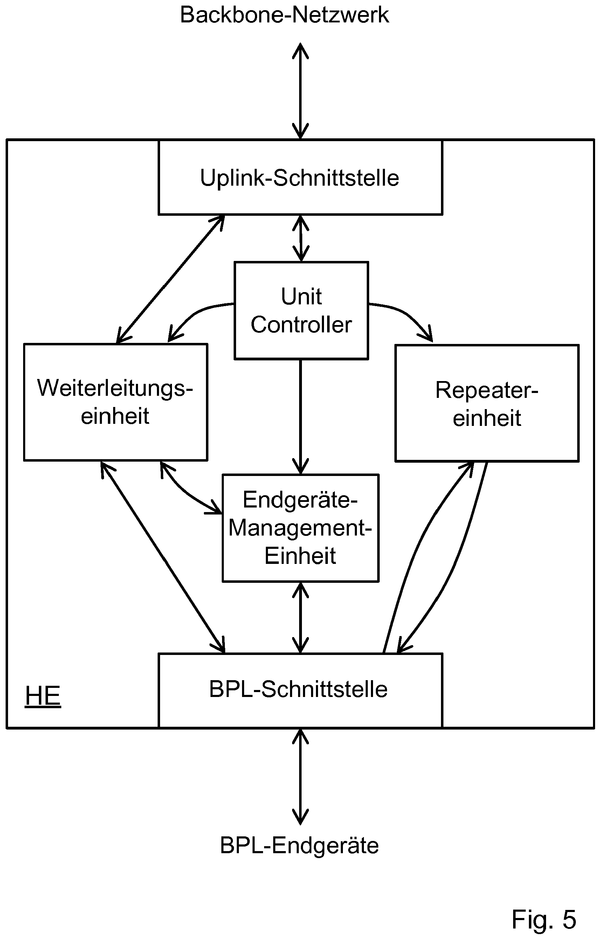

Fig. 5 zeigt ein vereinfachtes Blockschaltbild mit Funktionsblöcken eines Ausführungsbeispiels eines erfindungsgemäßen Headends, das einen Repeater-Betrieb bereitstellt. Eine BPL-Schnittstelle stellt eine Verbindung über ein BPL-Netzwerk mit mehreren BPL-Endgeräten her. Eine Uplink-Schnittstelle ist vorgesehen, mit der eine Verbindung zu einem Backbone-Netzwerk hergestellt werden kann. Ein Unit-Controller ist mit der Uplink-Schnittstelle verbunden, um kontinuierlich oder zumindest periodisch den Status der Verbindung zu dem Backbone-Netzwerk zu überprüfen. Dieses Mittel zur Detektion des Zustandes der Verbindung zu dem Backbone-Netzwerk kann das Headend von dem Normalbetrieb in den Repeater-Betrieb versetzen bzw. umgekehrt. Für den Normalbetrieb ist eine Weiterleitungseinheit vorgesehen, die kommunizierend mit der BPL-Schnittstelle und mit der Uplink-Schnittstelle verbunden ist. Über die BPL-Schnittstelle empfangene Datenpakete von BPL-Endgeräten werden von der Weiterleitungseinheit empfangen, dort aufbereitet und für das Übermitteln für das Backbone-Netzwerk vorbereitet. Hier werden beispielsweise Header-Informationen umgesetzt und eventuell die Datenpakete in eine für das Backbone-Netzwerk geeignete Form transformiert. Danach versendet die Weiterleitungseinheit das Datenpaket über die Uplink-Schnittstelle an das Backbone-Netzwerk. Umgekehrt werden Datenpakete, die über die Uplink-Schnittstelle empfangen werden, an die Weiterleitungseinheit weitergeleitet, die die empfangenen Datenpakete für den Versand über die BPL-Schnittstelle aufbereitet und eventuell umpaketiert. Die Datenpakete werden danach über die BPL-Schnittstelle an das BPL-Netzwerk gesendet und dort an das jeweilige BPL-Endgerät weitergeleitet.

Zur Erfüllung der Verwaltungsfunktion ist in dem erfindungsgemäßen Headend eine Endgeräte-Management-Einheit vorgesehen. Der Aufbau der Verbindung zwischen einem BPL-Endgerät und dem Headend HE wird durch diese Endgeräte-Management-Einheit durchgeführt und überwacht. Die Endgeräte-Management-Einheit übernimmt auch das Versenden von Mitteilungen in das BPL-Netzwerk, mit denen die Bereitschaft für einen Verbindungsaufbau zu BPL-Endgeräten signalisiert wird. Die Endgeräte-Management-Einheit ist kommunizierend mit der Weiterleitungseinheit verbunden, wodurch für das Weiterleiten von Datenpaketen zwischen dem Backbone-Netzwerk und dem BPL-Netzwerk notwendige Informationen bereitgestellt werden können. Dies können beispielsweise Adressinformationen von verbunden BPL-Endgeräten sein oder auch deren Quality-of-Service-Anforderungen.

Das Headend HE umfasst ferner eine Repeater-Einheit, die im Normalbetrieb deaktiviert ist und die Repeater-Funktion für das Headend bereitstellt. Der Unit-Controller kann die Repeater-Einheit aktivieren und deaktivieren. Die Repeater-Einheit ist dazu ausgestaltet, Datenpakete aus dem BPL-Netzwerk über die BPL-Schnittstelle zu empfangen. Die Repeater-Einheit bereitet empfangene Datenpakete auf und sendet diese über die BPL-Schnittstelle wieder an das BPL-Netzwerk aus.

Sobald der Unit-Controller einen Ausfall der Backbone-Verbindung feststellt, deaktiviert er die Weiterleitungseinheit sowie die Endgeräte-Management-Einheit. Gleichzeitig wird die Repeater-Einheit aktiviert und das Headend damit vom Normalbetrieb in den Repeater-Betrieb umgeschaltet. Damit verlieren sämtliche mit dem Headend HE verbundenen BPL-Endgeräte ihre Verbindung zu dem Headend und suchen sich ein neues erreichbares Headend. Durch das Headend HE empfangene Datenpakete werden der Repeater-Einheit zugeleitet und dann wieder in aufbereiteter Form in das BPL-Netzwerk gesendet. Der Unit-Controller überwacht weiterhin - eventuell mit größeren zeitlichen Abständen - den Status der Verbindung zu dem Backbone-Netzwerk. Sobald festgestellt wird, dass das Backbone-Netzwerk wieder verfügbar ist, deaktiviert der Unit-Controller die Repeater-Einheit und aktiviert gleichzeitig die Weiterleitungseinheit sowie die Endgeräte-Management-Einheit. Die Endgeräte-Management-Einheit sendet ab diesem Moment wieder Mitteilungen aus, mit der die Bereitschaft für die Annahme und Bearbeitung von Verbindungsanfragen signalisiert wird. Alle BPL-Endgeräte, die über das Headend HE besser eine Verbindung zu dem Backbone-Netzwerk aufbauen können als über deren aktuelles Headend, senden daraufhin Verbindungsanfragen an das Headend HE, die über die BPL-Schnittstelle an die Endgeräte-Management-Einheit übermittelt werden und dort einen Verbindungsaufbau auslösen. Damit nimmt das Headend HE wieder seine Verwaltungsfunktion einer Zelle wahr und leitet Datenpakete zwischen dem BPL-Netzwerk und dem Backbone-Netzwerk weiter.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- BE1: BPL-Endgerät 1
- BE2: BPL-Endgerät 2
- HEa: Headend a
- HEb: Headend b
- HE1: Headend 1
- HE2: Headend 2
- HE1': Headend 1' mit Repeater-Funktion

## Patentansprüche

1. Headend zum Bereitstellen einer Kommunikation zwischen Breitband-Powerline-Endgeräten - BPL-Endgeräten - und einem Backbone-Netzwerk, wobei das Headend (HE1, HE1', HE2) eine BPL-Schnittstelle zur Kommunikation mit den BPL-Endgeräten (BE1, BE2) und eine Uplink-Schnittstelle zur Kommunikation mit dem Backbone-Netzwerk aufweist, wobei sich die BPL-Endgeräte (BE1, BE2) über die BPL-Schnittstelle mit dem Headend (HE1, HE1', HE2) verbinden, wobei das Headend (HE1, HE1', HE2) in einem Normalbetrieb verbundene BPL-Endgeräte (BE1, BE2) verwaltet und Datenpakete zwischen den verbundenen BPL-Endgeräten (BE1, BE2) und dem Backbone-Netzwerk weiterleitet,
**dadurch gekennzeichnet, dass** das Headend (HE1, HE1', HE2) Mittel zur Detektion des Zustands der Verbindung zu dem Backbone-Netzwerk aufweist und dass das Headend (HE1, HE1') bei Detektion eines Ausfalls der Verbindung zum Backbone-Netzwerks zur Deaktivierung der Verwaltungsfunktion für die verbundenen BPL-Endgeräte (BE1, BE2) ausgebildet ist, wodurch eine durch das Headend (HE1, HE1') verwaltete BPL-Zelle aufgelöst wird.

2. Headend nach Anspruch 1, **dadurch gekennzeichnet, dass** das Headend bei Detektion eines Ausfalls der Verbindung zum Backbone-Netzwerk zum Aktivieren eines Repeater-Betriebs ausgebildet ist, wobei das Headend (HE1') in dem Repeater-Betrieb über die BPL-Schnittstelle Datenpakete empfängt, aufbereitet und über die BPL-Schnittstelle wieder aussendet.

3. Headend nach Anspruch 1 oder 2, **dadurch gekennzeichnet, dass** das Mittel zur Detektion des Zustands der Verbindung zu dem Backbone-Netzwerk periodisch Testsignale in das Backbone-Netzwerk sendet oder Testsignale aus dem Backbone-Netzwerk empfängt und bei Ausbleiben der Testsignale über einen vordefinierten Zeitraum auf einen Ausfall schließt, und/oder
dass das Mittel zur Detektion des Zustands der Verbindung zu dem Backbone-Netzwerk einen Timer umfasst, der beim erfolgreichen Empfang oder Senden eines Datenpakets zurückgesetzt wird, und dass bei Überschreiten einer definierten Zeitspanne auf den Ausfall der Verbindung geschlossen wird.

4. Headend nach einem der Ansprüche 1 bis 3, **dadurch gekennzeichnet, dass** das Headend (HE1, HE1', HE2) die verbunden BPL-Endgeräte (BE1, BE2) in Form einer Zelle verwaltet und in dem Normalbetrieb periodisch Mitteilungen über die Bereitschaft zum Verwalten von Endgeräten aussendet.

5. Headend nach einem der Ansprüche 1 bis 4, **dadurch gekennzeichnet, dass** die BPL-Schnittstelle zur Übertragung von BPL-Signalen über ein Niederspannungsnetzwerk ausgebildet ist und dass die Uplink-Schnittstelle durch BPL auf Mittelspannungsebene, eine DSL - Digital Subscriber Line - Variante oder zur Anbindung an ein MAN - Metropolitan Area Network - implementiert ist.

6. Headend nach einem der Ansprüche 1 bis 5, **dadurch gekennzeichnet, dass** die BPL-Endgeräte (BE1, BE2) Modems, Powerline-Gateways oder Smart-Meter umfassen.

7. System mit ausfalltoleranter Anbindung von Breitband-Powerline-Endgeräten - BPL-Endgeräte - über eines von mindestens zwei Headends an ein Backbone-Netzwerk, wobei die Headends (HE1, HE1', HE2) untereinander über das Backbone-Netzwerk verbunden sind, wobei sich mehrere BPL-Endgeräte (BE1, BE2) mit jeweils einem der Headends (HE1, HE1', HE2) verbinden und wobei jedes Headend (HE1, HE1', HE2) Datenpakete zwischen dem Backbone-Netzwerk und den verbundenen BPL-Endgeräten (BE1, BE2) weiterleitet,
**dadurch gekennzeichnet, dass** mindestens eines der Headends (HE1 HE1') - erstes Headend - entsprechend einem der Ansprüche 1 bis 6 ausgestaltet ist.

8. System nach Anspruch 7, **dadurch gekennzeichnet dass** das erste Headend (HE1') im Repeater-Betrieb über die BPL-Schnittstelle BPL-Datenpakete empfängt, aufbereitet und über die BPL-Schnittstelle wieder aussendet, um dadurch eine Verbindung zu einem der anderen Headends (HE2) zu ermöglichen.

9. System nach Anspruch 7 oder 8, **dadurch gekennzeichnet, dass** das System ein Netzwerkverwaltungssystem umfasst, in dem der Status des ersten Headends (HE1, HE1') gespeichert ist, wobei für das erste Headend ein eigener Gerätetyp vorgesehen ist.

10. System nach einem der Ansprüche 7 bis 9, **dadurch gekennzeichnet, dass** das Backbone-Netzwerk einen Zugang zu einem weiteren Netzwerk herstellt.

11. Verfahren zur ausfalltoleranter Anbindung von Breitband-Powerline-Endgeräten - BPL-Endgeräte - über eines von mindestens zwei Headends an ein Backbone-Netzwerk, wobei jedes Headend (HE1, HE1', HE2) in einem Normalbetrieb mehrere mit dem Headend über BPL verbundene BPL-Endgeräte (BE1, BE2) verwaltet, wobei jedes Headend (HE1, HE1', HE2) in dem Normalbetrieb Datenpakete zwischen dem Backbone-Netzwerk und den verbundenen BPL-Endgeräten (BE1, BE2) weiterleitet, umfassend die Schritte:
Überwachen des Zustands der Verbindung zwischen einem der Headends (HE1, HE1') - erstes Headend - und dem Backbone-Netzwerk,
Detektieren eines Ausfalls der Verbindung zwischen dem ersten Headend (HE1, HE1') und dem Backbone-Netzwerk und
Deaktivieren einer Verwaltungsfunktion des ersten Headends (HE1, HE1'), wodurch bisher verbundene BPL-Endgeräte (BE1, BE2) nicht mehr durch das erste Headend (HE1, HE1') verwaltet werden und eine durch das erste Headend (HE1, HE1') verwaltete BPL-Zelle aufgelöst wird.

12. Verfahren nach Anspruch 11, **gekennzeichnet durch** die weiteren Schritte bei Detektion eines Ausfalls der Verbindung zum Backbone-Netzwerk:
Aktivieren eines Repeater-Betriebs bei dem ersten Headend (HE1'), wobei das erste Headend (HE1') bei Aktivieren des Repeater-Betriebs rekonfiguriert wird,
Empfangen, Aufbereiten und Weiterleiten von über BPL empfangenen Datenpaketen und
Herstellen einer Verbindung zwischen den zuvor mit dem ersten Headend (HE1') verbundenen BPL-Endgeräten (BE1, BE2) und einem der weiteren Headends (HE2) über BPL unter Verwendung des ersten Headends (HE1') im Repeater-Betrieb.

13. Verfahren nach Anspruch 11 oder 12, **dadurch gekennzeichnet, dass** nach Detektion eines Ausfalls der Verbindung zum Backbone-Netzwerk periodisch ein Rücksetzen der Verbindung zum Backbone vorgenommen wird.

14. Verfahren nach einem der Ansprüche 11 bis 13, **gekennzeichnet durch** die weiteren Schritte:
fortgesetztes Überwachen des Zustands der Verbindung zwischen dem ersten Headend (HE1, HE1') und dem Backbone-Netzwerk,
Detektieren des Wiederherstellens der Verbindung zwischen dem ersten Headend (HE1, HE1') und dem Backbone-Netzwerk,
Aktivieren der Verwaltungsfunktion des ersten Headends (HE1, HE1'),
Deaktivieren des Repeater-Betriebs bei dem ersten Headend (HE1'), sofern bei dem ersten Headend ein Repeater-Betrieb vorgesehen ist, und
Herstellen mindestens einer Verbindung zwischen einem der BPL-Endgeräte (BE1, BE2) und dem ersten Headend (HE1, HE1').

15. Verfahren nach einem der Ansprüche 11 bis 14, **dadurch gekennzeichnet, dass** durch jedes Headend (HE1, HE1', HE2) in dem Normalbetrieb periodisch Mitteilungen über die Bereitschaft zum Verwalten von Endgeräten (BE1, BE2) ausgesendet werden und dass die BPL-Endgeräte (BE1, BE2) basierend auf die jeweils empfangenen Mitteilung über eine Verbindung zu dem zugehörigen Headend (HE1, HE1', HE2) entscheiden.

## Claims

1. Headend for providing communication between broadband powerline end devices - BPL end devices - and a backbone network, wherein the headend (HE1, HE1', HE2) has a BPL interface for communication with the BPL end devices (BE1, BE2) and an uplink interface for communication with the backbone network, wherein the BPL end devices (BE1, BE2) are connected to the headend (HE1, HE1', HE2) via the BPL interface, wherein the headend (HE1, HE1', HE2) administers BPL end devices (BE1, BE2) which are connected during normal operation and transmits data packets between the connected BPL end devices (BE1, BE2) and the backbone network, **characterised in that** the headend (HE1, HE1', HE2) has means for detecting the state of the connection to the backbone network and **in that** the headend (HE1, HE1') in the event of detection of a failure of the connection to the backbone network is constructed to deactivate the administration function for the connected BPL end devices (BE1, BE2), whereby a BPL cell which is administered by the headend (HE1, HE1') is broken up.

2. Headend according to claim 1, **characterised in that** the headend in the event of detection of a failure of the connection to the backbone network is constructed to activate a repeater operation, wherein the headend (HE1') in repeater operation receives data packets via the BPL interface, prepares them and transmits them again via the BPL interface.

3. Headend according to claim 1 or 2, **characterised in that** the means for detecting the state of the connection to the backbone network periodically transmits test signals to the backbone network or receives test signals from the backbone network and, when the test signals are absent for a predefined period of time, concludes a failure, and/or
**in that** the means for detecting the state of the connection to the backbone network comprises a timer which, when a data packet has been successfully received or sent, is reset, and **in that**, when a defined period of time has been exceeded, the failure of the connection is concluded.

4. Headend according to any one of claims 1 to 3, **characterised in that** the headend (HE1, HE1', HE2) administers the connected BPL end devices (BE1, BE2) in the form of a cell and during normal operation periodically transmits communications relating to the readiness for administering end devices.

5. Headend according to any one of claims 1 to 4, **characterised in that** the BPL interface is constructed to transmit BPL signals via a low-voltage network and **in that** the uplink interface is implemented via BPL on a medium-voltage level, a DSL - Digital Subscriber Line - variant or for connection to a MAN - Metropolitan Area Network.

6. Headend according to any one of claims 1 to 5, **characterised in that** the BPL end devices (BE1, BE2) comprise modems, Powerline gateways or Smart Meters.

7. System with failure-tolerant connection of broadband powerline end devices - BPL end devices - via one of at least two headends to a backbone network, wherein the headends (HE1, HE1', HE2) are connected to each other via the backbone network, wherein a plurality of BPL end devices (BE1, BE2) are connected in each case to one of the headends (HE1, HE1', HE2) and wherein each headend (HE1, HE1', HE2) transmits data packets between the backbone network and the connected BPL end devices (BE1, BE2),
**characterised in that** at least one of the headends (HE1, HE1') - first headend - is constructed in accordance with any one of claims 1 to 6.

8. System according to claim 7, **characterised in that** the first headend (HE1') in repeater operation receives BPL data packets via the BPL interface, prepares them and transmits them again via the BPL interface in order to thereby enable a connection to one of the other headends (HE2).

9. System according to claim 7 or 8, **characterised in that** the system comprises a network administration system in which the status of the first headend (HE1, HE1') is stored, wherein for the first headend an individual device type is provided.

10. System according to any one of claims 7 to 9, **characterised in that** the backbone network produces access to another network.

11. Method for failure-tolerant connection of broadband powerline end devices - BPL end devices - via one of at least two headends to a backbone network, wherein each headend (HE1, HE1', HE2) during normal operation administers a plurality of BPL end devices (BE1, BE2) which are connected to the headend via BPL, wherein each headend (HE1, HE1', HE2) during normal operation transmits data packets between the backbone network and the connected BPL end devices (BE1, BE2), comprising the steps of:
monitoring the state of the connection between one of the headends (HE1, HE1') - first headend - and the backbone network,
detecting a failure of the connection between the first headend (HE1, HE1') and the backbone network and
deactivating an administration function of the first headend (HE1, HE1'), whereby previously connected BPL end devices (BE1, BE2) are no longer administered by the first headend (HE1, HE1') and a BPL cell which is administered by the first headend (HE1, HE1') is broken up.

12. Method according to claim 11, **characterised by** the additional steps in the event of detection of a failure of the connection to the backbone network:
activating a repeater operation in the first headend (HE1'),
wherein the first headend (HE1') is reconfigured when the repeater operation is activated,
receiving, preparing and transmitting data packets received via BPL, and
producing a connection between the BPL end devices (BE1, BE2) which were previously connected to the first headend (HE1') and one of the additional headends (HE2) via BPL using the first headend (HE1') in repeater operation.

13. Method according to claim 11 or 12, **characterised in that**, after detection of a failure of the connection to the backbone network, a resetting of the connection to the backbone is carried out periodically.

14. Method according to any one of claims 11 to 13, **characterised by** the additional steps:
continued monitoring of the state of the connection between the first headend (HE1, HE1') and the backbone network, detecting the reproduction of the connection between the first headend (HE1, HE1') and the backbone network,
activating the administration function of the first headend (HE1, HE1'),
deactivating the repeater operation in the first headend (HE1') if a repeater operation is provided in the first headend, and
producing at least one connection between one of the BPL end devices (BE1, BE2) and the first headend (HE1, HE1').

15. Method according to any one of claims 11 to 14, **characterised in that**, as a result of each headend (HE1, HE1', HE2) during normal operation, communications are periodically transmitted relating to the readiness for administering end devices (BE1, BE2) and **in that** the BPL end devices (BE1, BE2) based on the communication received in each case decide on a connection to the associated headend (HE1, HE1', HE2).

## Revendications

1. Tête de réseau destinée à la fourniture d'une communication entre des terminaux Powerline à large bande - terminaux BPL - et un réseau backbone, la tête de réseau (HE1, HE1', HE2) présentant une interface BPL destinée à la communication avec les terminaux BPL (BE1, BE2) et une interface de liaison montante destinée à la communication avec le réseau backbone, les terminaux BPL (BE1, BE2) se raccordant à la tête de réseau (HE1, HE1', HE2) via l'interface BPL, la tête de réseau (HE1, HE1', HE2) gérant des terminaux BPL (BE1, BE2) raccordés dans le mode normal et transmettant des paquets de données entre les terminaux BPL (BE1, BE2) raccordés et le réseau backbone,
**caractérisée en ce que** la tête de réseau (HE1, HE1', HE2) présente des moyens de détection de l'état de la liaison avec le réseau backbone, et **en ce que**, lors de la détection d'une défaillance de la liaison avec le réseau backbone, la tête de réseau (HE1, HE1') est constituée pour la désactivation de la fonction de gestion pour les terminaux BPL (BE1, BE2) raccordés, ce qui fait qu'une cellule BPL gérée par la tête de réseau (HE1, HE1') est dissoute.

2. Tête de réseau selon la revendication 1, **caractérisée en ce que**, lors de la détection d'une défaillance de la liaison avec le réseau backbone, la tête de réseau est constituée pour l'activation d'un mode répéteur, la tête de réseau (HE1') recevant, traitant et réémettant des paquets de données dans le mode répéteur via l'interface BPL.

3. Tête de réseau selon la revendication 1 ou 2, **caractérisée en ce que** le moyen de détection de l'état de la liaison avec le réseau backbone envoie périodiquement des signaux de test dans le réseau backbone ou reçoit périodiquement des signaux de test en provenance du réseau backbone et, en cas d'absence des signaux de test pendant une période de temps prédéfinie, conclut à une défaillance, et/ou
**en ce que** le moyen de détection de l'état de la liaison avec le réseau backbone comprend une minuterie qui, lors d'une réception ou émission réussie d'un paquet de données, est remise à zéro, et **en ce que**, en cas de passage au-dessus d'un laps de temps défini, il est conclus à la défaillance de la liaison.

4. Tête de réseau selon l'une des revendications 1 à 3, **caractérisée en ce que** la tête de réseau (HE1, HE1', HE2) gère les terminaux BPL (BE1, BE2) raccordés sous forme d'une cellule et émet périodiquement en mode normal des notifications sur l'état de préparation pour la gestion de terminaux.

5. Tête de réseau selon l'une des revendications 1 à 4, **caractérisée en ce que** l'interface BPL est constituée pour la transmissions de signaux BPL via un réseau basse tension, et **en ce que** l'interface de liaison montante est mise en oeuvre par BPL à un niveau de tension moyenne, une variante DSL - Digital Subscriber Line - ou pour le rattachement à un MAN - Metropolitan Area Network.

6. Tête de réseau selon l'une des revendications 1 à 5, **caractérisée en ce que** les terminaux BPL (BE1, BE2) comprennent des modems, des Powerline-Gateways ou des Smart-Meters.

7. Système avec rattachement, tolérant aux pannes, de terminaux Powerline à large bande - terminaux BPL - à un réseau backbone via une tête de réseau parmi au moins deux têtes de réseau, les têtes de réseau (HE1, HE1', HE2) étant raccordées les unes aux autres via le réseau backbone, plusieurs terminaux BPL (BE1, BE2) se raccordant respectivement à l'une des têtes de réseau (HE1, HE1', HE2), et chaque tête de réseau (HE1, HE1', HE2) transmettant des paquets de données entre le réseau backbone et les terminaux BPL (BE1, BE2) raccordés,
**caractérisé en ce qu'**au moins une des têtes de réseau (HE1, HE1') - première tête de réseau - est constituée d'une façon correspondant à l'une des revendications 1 à 6.

8. Système selon la revendication 7, **caractérisé en ce que** la première tête de réseau (HE1'), dans le mode répéteur, reçoit, traite et réémet des paquets de données via l'interface BPL afin de permettre ainsi une liaison avec l'une des autres têtes de réseau (HE2).

9. Système selon la revendication 7 ou 8, **caractérisé en ce que** le système comprend un système de gestion de réseau dans lequel le statut de la première tête de réseau (HE1, HE1') est enregistré, un type d'appareil spécifique étant prévu pour la première tête de réseau.

10. Système selon l'une des revendications 7 à 9, **caractérisé en ce que** le réseau backbone réalise un accès à un autre réseau.

11. Procédé destiné rattachement, tolérant aux pannes, de terminaux Powerline à large bande - terminaux BPL - à un réseau backbone via une tête de réseau parmi au moins deux têtes de réseau, chaque tête de réseau (HE1, HE1', HE2) gérant, dans un mode normal, plusieurs terminaux BPL (BE1, BE2) raccordés à la tête de réseau via BPL, chaque tête de réseau (HE1, HE1', HE2) transmettant dans le mode normal des paquets de données entre le réseau backbone et les terminaux BPL (BE1, BE2) raccordés, comprenant les étapes suivantes :
surveillance de l'état de la liaison entre l'une des têtes de réseau (HE1, HE1') - première tête de réseau - et le réseau backbone,
détection d'une défaillance de la liaison entre la première tête de réseau (HE1, HE1') et le réseau backbone, et
désactivation d'une fonction de gestion de la première tête de réseau (HE1, HE1'), à la suite de quoi des terminaux BPL (BE1, BE2) raccordés jusqu'alors ne sont plus gérés par la première tête de réseau (HE1, HE1'), et une cellule BPL gérée par le première tête de réseau (HE1, HE1') est.

12. Procédé selon la revendication 11, **caractérisé par** les autres étapes lors de la détection d'une défaillance de la liaison avec le réseau backbone :
activation d'un mode répéteur pour la première tête de réseau (HE1'), la première tête de réseau (HE1') étant reconfigurée lors de l'activation du mode répéteur,
réception, traitement et transmission de paquets de données rençues via BPL, et
réalisation d'une liaison entre les terminaux BPL (BE1, BE2) raccordés antérieurement à la première tête de réseau (HE1') et une des autres têtes de réseau (HE2) via BPL avec utilisation de la première tête de réseau (HE1') dans le mode répéteur.

13. Procédé selon la revendication 11 ou 12, **caractérisé en ce que**, après la détection d'une défaillance de la liaison avec le réseau backbone, une remise à zéro de la liaison avec le backbone est effectuée périodiquement.

14. Procédé selon l'une des revendications 11 à 13, **caractérisé par** les étapes supplémentaires suivantes :
poursuite de la surveillance de l'état de la liaison entre la première tête de réseau (HE1, HE1') et le réseau backbone,
détection de la restauration de la liaison entre la première tête de réseau (HE1, HE1') et le réseau backbone,
activation de la fonction de gestion de la première tête de réseau (HE1, HE1'),
désactivation du mode répéteur pour la première tête de réseau (HE1') dans la mesure où un mode répéteur est prévu pour la première tête de réseau, et
réalisation d'au moins une liaison entre l'un des terminaux BPL (BE1, BE2) et la première tête de réseau (HE1, HE1').

15. Procédé selon l'une des revendications 11 à 14, **caractérisé en ce que** des notifications sur l'état de préparation pour la gestion de terminaux (BE1, BE2) sont envoyées périodiquement par chaque tête de réseau (HE1, HE1', HE2) dans le mode normal, et **en ce que** les terminaux BPL (BE1, BE2) décident, sur la base de la notification respectivement reçue, d'une liaison avec la tête de réseau (HE1, HE1', HE2) correspondante.
